Europäisches Patentamt

European Patent Office

Office européen des brevets

(19)

(11) Veröffentlichungsnummer: **0 274 031 B1**

(12) **EUROPÄISCHE PATENTSCHRIFT**

(45) Veröffentlichungstag der Patentschrift: **18.12.91**

(51) Int. Cl.5: **G11B 7/09**, G11B 7/095

(21) Anmeldenummer: **87117056.9**

(22) Anmeldetag: **19.11.87**

(54) **Spurregelkreis zum Führen eines Lichtstrahls.**

(30) Priorität: **15.12.86 DE 3642763**

(43) Veröffentlichungstag der Anmeldung:
**13.07.88 Patentblatt 88/28**

(45) Bekanntmachung des Hinweises auf die
Patenterteilung:
**18.12.91 Patentblatt 91/51**

(84) Benannte Vertragsstaaten:
**AT BE CH DE ES FR GB IT LI LU NL SE**

(56) Entgegenhaltungen:
**EP-A- 0 099 576**
**GB-A- 2 110 843**

**PATENT ABSTRACTS OF JAPAN, Band 10,
Nr. 84 (P-442)[2141], 3. April 1986; & JP-A-60
219 640 (PIONEER) 02-11-1985**

**PATENT ABSTRACTS OF JAPAN, Band 9, Nr.
195 (P-379)[1918], 13. August 1985; & JP-A-60
61 925 (RICOH) 09-04-1985**

(73) Patentinhaber: **Deutsche Thomson-Brandt
GmbH
Hermann-Schwer-Strasse 3 Postfach 1307
W-7730 Villingen-Schwenningen(DE)**

(72) Erfinder: **Füldner, Friedrich
Wilstorfstrasse 15
W-7730 Villingen-Schwenningen(DE)**
Erfinder: **Kurz, Arthur
Ludwigsburgerstrasse 26
W-7500 Karlsruhe 41(DE)**
Erfinder: **Baas, Dieter
Sofienstrasse 10
W-7640 Kehl(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services

**Beschreibung**

Die Erfindung betrifft einen Spurregelkreis zum Führen eines Lichtstrahls entlang den Datenspuren eines Aufzeichnungsträgers, der den Lichtstrahl auf einen Photodetektor reflektiert, dessen Ausgangsspannung über einen Regelverstärker einem Stellglied zugeführt wird.

Derartige Spurregelkreise sind z.B. in den optischen Abtastsystemen von CD-Spielern nötig, um einen die Informationen auslesenden Lichtstrahl entlang den spiralförmigen Datenspuren der CD-Platte zu führen.

Optische Abtastsysteme für CD-Spieler, häufig als optical pick-up bezeichnet, sind z.B. in Electronic components & applications, Volume 6, No. 4, 1984 auf Seite 209-215 beschrieben und abgebildet.

Der von einer Laserdiode ausgesendete Lichtstrahl wird mittels Linsen auf die CD-Platte fokussiert und von dort auf einen Photodetektor reflektiert, aus dessen Ausgangssignalen sowohl die auf der CD-Platte gespeicherten Daten als auch die Ist-Werte für den Spur- und den Fokusregelkreis gewonnen werden. Mittels des Fokusregelkreises wird der von der Laserdiode ausgesendete Lichtstrahl auf die CD-Platte fokussiert, mittels des Spurregelkreises wird er entlang den Datenspuren der CD-Platte geführt. Der Ist-Wert für den Spurregelkreis, in der genannten Literaturstelle als radial tracking error bezeichnet, wird dem Eingang eines Regelverstärkers zugeführt, dessen Ausgang mit einem Stellglied verbunden ist. Dieses Stellglied, meist Radialantrieb genannt, verschiebt das optische Abtastsystem bezüglich der CD-Platte in radialer Richtung, so daß der von der Laserdiode ausgesendete Lichtstrahl genau entlang den Datenspuren geführt werden kann, um die auf der CD-Platte gespeicherten Informationen zu lesen.

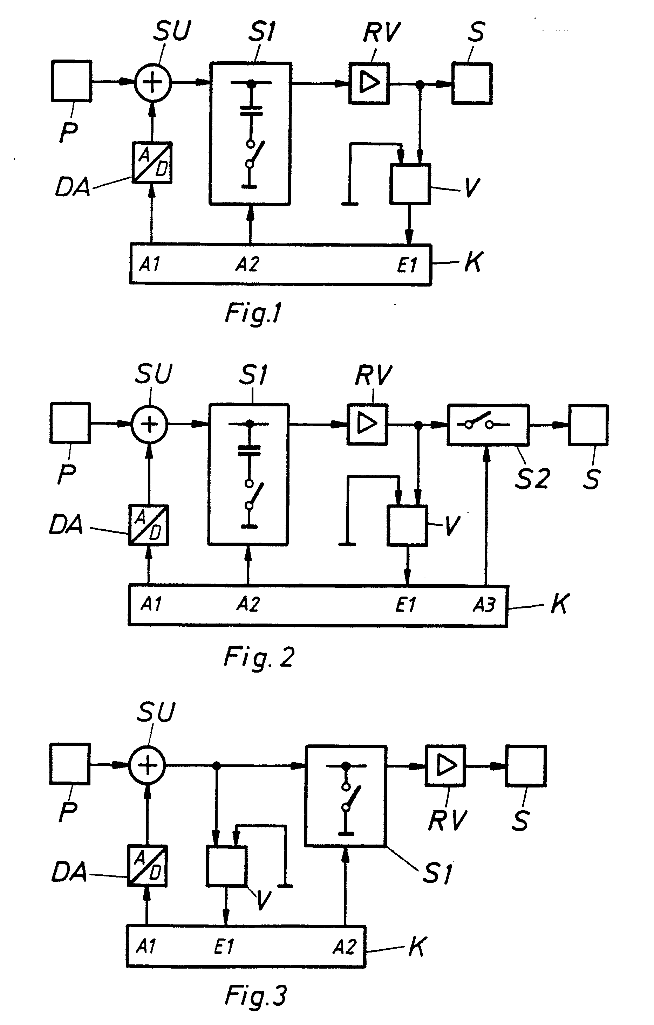

Bei dem optischen Abtastsystem, das Figur 2b auf Seite 213 zeigt, ist der Photodetektor aus sechs quadratischen Elementen A, B, C, D, E und F aufgebaut. Die vier Elemente A, B, C und D sind zu einem Quadrat zusammengefügt, die Elemente E und F liegen an zwei sich gegenüberliegenden Ecken dieses Quadrates.

Aus den Ausgangsspannungen der Elemente E und F wird in einem Differenzverstärker der Ist-Wert, das radial tracking error-Signal, F-E gebildet. Weil aber die beiden Elemente E und F infolge von Fertigungstoleranzen unterschiedliche Parameter aufweisen und es sich beim Differenzverstärker ebenso wie beim Regelverstärker nicht um ideale sondern um reale Bauteile handelt, ist der Spurregelkreis mit einer Offset-Spannung behaftet. Ohne Kompensation dieser Offset-Spannung arbeitet der Spurregelkreis unsymmetrisch. Erwünscht ist aber, daß der Spurregelkreis symmetrisch arbeitet, d.h.,

daß sein Regelbereich symmetrisch ist. Deshalb wird bei der Produktion eines CD-Spielers durch manuelles Einstellen eines Potentiometers ein Abgleich des Regelverstärkers durchgeführt, damit der Regelkreis symmetrisch arbeiten kann.

Einstellungen von Hand sind aber stets von Nachteil, denn sie erfordern viel Sorgfalt und ein Meßinstrument. Ein weiterer Nachteil zeigt sich erst nach einiger Zeit, wenn sich die Parameter des Photodetektors, des Differenz- und des Regelverstärkers infolge Alterung verändert haben. Auch Temperaturschwankungen führen zu unterschiedlichen Offset-Spannungen. Das Potentiometer für den Abgleich des Regelverstärkers müßte deshalb ständig nachgestellt werden.

Aus der JP-A 60-61925 ist ein Spurregelkreis bekannt, der einen Lichtstrahl entlang der Datenspuren eines Aufzeichnungsträgers führt, der den Lichtstrahl auf einen Photodetektor reflektiert; dessen Ausgangsspannung wird mittels eines Schaltkreises entweder dem Additionseingang eines Differenzverstärkers oder dem Eingang eines DC-Offset-Spannungsdetektors zugeführt, dessen Ausgang mit dem Eingang eines Analog-Digital-Wandlers verbunden ist. Der Ausgang des Analog-Digital-Wandlers ist mit dem Eingang eines Speichers verbunden, dessen Ausgang an den Eingang eines Digital-Analog-Wandlers angeschlossen ist. Der Ausgang des Digital-Analog-Wandlers ist mit dem Subtraktionseingang des Differenzverstärkers verbunden, dessen Ausgang mit dem Stellglied des Spurregelkreises verbunden ist.

Zur Kompensation des Gleichspannungs-Offsets wird bei geöffnetem Regelkreis das Ausgangssignal des Photodetektors dem DC-Offset-Spannungsdetektor zugeführt, dessen analoges Ausgangssignal vom Analog-Digital-Wandler in einen digitalen Wert umgewandelt wird, der im Speicher gespeichert wird. Der Regelkreis kann jetzt wieder geschlossen werden. Der Ausgang des Photodetektors wird wieder mit dem Additionseingang des Differenzverstärkers verbunden. Der im Speicher gespeicherte Wert wird mittels des Digital-Analog-Wandlers in eine analoge Kompensationsspannung umgewandelt, die am Subtraktionseingang des Differenzverstärkers liegt, um den Gleichspannungsoffset des Spurregelkreises zu kompensieren.

Ein erster Nachteil dieses Spurregelkreises liegt darin, daß sowohl ein Digital-Analog-Wandler als auch ein Analog-Digital-Wandler erforderlich sind, zumal Wandler verhältnismäßig teuere Bauteile sind.

Doch trotz des hohen Aufwandes in Form eines Analog-Digital-Wandlers und eines Digital-Analog-Wandlers ist dieser bekannte Spurregelkreis mit einem weiteren Nachteil behaftet, der sich darin zeigt, daß die Offset-Spannung zwar detektiert und daraus die Kompensationsspannung ermittelt wird, jedoch weder die Güte der Kompensation geprüft noch die Kompensation falls erforderlich korrigiert wird.

Es ist daher Aufgabe der Erfindung, bei einem Spurregelkreis zum Führen eines Lichtstrahls entlang den Datenspuren eines Aufzeichnungsträgers den Aufwand an teueren Bauteilen zu verringern und trotzdem zugleich eine Verbesserung der Kompensationswirkung zu erzielen.

Die Erfindung löst diese Aufgabe durch die im Anspruch 1 angegebenen Merkmale.

Ein wesentlicher Vorteil der Erfindung liegt nun darin, daß sie die in der Regel bei jeder technischen Vorrichtung sich widersprechenden Forderungen nach einerseits möglichst geringem Aufwand an Bauteilen und andererseits möglichst optimaler Wirkung überraschenderweise gleichzeitig erfüllt.

Die Kompensation der Offset-Spannung erfolgt genauer als bei dem bekannten Spurregelkreis, weil die Kompensationsspannung in einem Regelvorgang erzeugt und gegebenenfalls nachgeregelt wird; der Aufwand an teueren Bauteilen ist geringer, denn es ist nur ein Digital-Analog-Wandler, jedoch kein Analog-Digital-Wandler erforderlich, wie aus der Beschreibung der Ausführungsbeispiele im folgenden ersichtlich ist.

Es zeigen

Figur 1    ein Ausführungsbeispiel der Erfindung gemäß Anspruch 2.

Figur 2    ein Ausführungsbeispiel der Erfindung gemäß Anspruch 3

Figur 3    ein Ausführungsbeispiel der Erfindung gemäß Anspruch 4

In Figur 1 ist der Ausgang des Photodetektors P mit dem ersten Eingang einer Summationsstelle SU verbunden, deren Ausgang mit dem Eingang eines steuerbaren Schalters S1 verbunden ist. Der Ausgang des steuerbaren Schalters S1 ist mit dem Eingang eines Regelverstärkers RV verbunden, dessen Ausgang mit dem Eingang eines Stellgliedes S und mit dem ersten Eingang eines Vergleichers V verbunden ist. Der Ausgang des Vergleichers V, dessen zweiter Eingang auf Bezugspotential liegt, ist mit dem Eingang E1 einer Kontrollschaltung K verbunden, deren erster Ausgang A1 mit dem Eingang eines Digital-Analog-Wandlers DA und deren zweiter Ausgang A2 mit dem Steuereingang des steuerbaren Schalters S1 verbunden ist. Der Ausgang des Digital-Analog-Wandlers DA ist mit dem zweiten Eingang der Summationsstelle SU verbunden.

Zu Beginn der automatischen Kompensation der Offset-Spannung wird der Regelkreis mittels des steuerbaren Schalters S1 von der Kontrollschaltung K geöffnet. Das kann, wie in Figur 1 angedeutet ist, z.B. dadurch geschehen, daß der Ausgang der Summationsstelle SU mittels einer Kapazität wechselspannungsmäßig auf Bezugspotential gelegt wird. Weil sich die CD-Platte dreht, gibt der Photodetektor P infolge der in den Datenspuren aufgezeichneten Daten eine HF-Spannung ab, die durch die Kapazität nach Bezugspotential kurzgeschlossen ist. Die Kontrollschaltung K gibt an ihrem ersten Ausgang A1 eine digitale Spannung ab, die wegen des Digital-Analog-Wandlers DA als analoge Kompensationsspannung in der Summationsstelle SU zur Ausgangsspannung des Photodetektors P addiert wird. Durch den Regelverstärker RV verstärkt, wird die Summe dieser beiden Spannungen dem ersten Eingang des Vergleichers V zugeführt. Die Kontrollschaltung K ändert nun solange die Spannung an ihrem ersten Ausgang A1, bis ihr der Vergleicher V durch ein Signal an seinem Ausgang anzeigt, daß die Spannung am Ausgang des Regelverstärkers RV, die verstärkte Summe aus der analogen Kompensationsspannung und der Ausgangsspannung des Photodetektors P, null wird. Darauf behält de Kontrollschaltung K den Wert der Spannung an ihrem ersten Ausgang A1 bei, bei dem die Spannung am Ausgang des Regelverstärkers RV gerade null wird und schließt über ein Signal an ihrem zweiten Ausgang A2 den Regelkreis, indem der Ausgang der Summationsstelle SU wechselspannungsmäßig wieder vom Bezugspotential getrennt wird. Die Spannung am Ausgang des Digital-Analog-Wandlers DA wird nun dauernd als Kompensationsspannung auf den Eingang des Regelverstärkers RV gegeben.

Weil das Signal am Ausgang des Vergleichers V zwei Zustände annehmen kann, weiß die Kontrollschaltung K bereits zu Beginn des Abgleichs, welche Polarität die zu kompensierende Offset-Spannung hat. Bei negativer Polarität der Offset-Spannung gibt die Kontrollschaltung K eine Kompensationsspannung positiver Polarität ab, bei positiver Polarität der Offset-Spannung hat die Kompensationsspannung dagegen negative Polarität. Weil die Kontrollschaltung K den Abgleich sofort mit der richtigen Polarität der Kompensationsspannung beginnt, dauert der Abgleichvorgang nur noch halb so lang.

Die Kompensation der Offset-Spannung kann z.B. jedesmal beim Einschalten des CD-Spielers, beim Wechseln einer CD-Platte oder während der Pause zwischen zwei Musikstücken auf der CD-Platte durchgeführt werden. Ein Abgleich von Hand ist nicht mehr nötig, Alterung der Bauteile und Drift ihrer Parameter infolge Temperaturschwankungen werden automatisch kompensiert.

In Figur 2 ist eine Weiterbildung des in Figur 1 abgebildeten Ausführungsbeispieles gezeigt. Es unterscheidet sich vom Ausführungsbeispiel aus Figur 1 dadurch, daß zwischen dem Ausgang des Regelverstärkers RV und dem Stellglied S ein weiterer steuerbarer Schalter S2 vorgesehen ist, dessen Steuereingang mit dem dritten Ausgang A3 der Kontrollschaltung K verbunden ist. Der steuerbare Schalter S2 wird während des Abgleichs von der Kontrollschaltung K geöffnet.

Diese Maßnahme hat den Vorteil, daß der Fokusregelkreis beim Einschalten des CD-Spielers den Lichtstrahl genauer auf die CD-Platte fokussiert. Ohne den steuerbaren Schalter S2 ist es sinnvoll, zunächst beim Spurregelkreis den Abgleich durchzuführen, anschliessend den von der Laserdiode ausgesendeten Lichtstrahl mittels des Fokusregelkreises auf die CD-Platte zu fokussieren und danach den Spurregelkreis noch einmal abzugleichen, weil sich die Offset-Spannung am Ausgang des Photodetektors P durch die Fokussierung geändert haben kann.

In Figur 3 ist ein Ausführungsbeispiel der Erfindung gezeigt, das sich von dem aus Figur 1 dadurch unterscheidet, daß der erste Eingang des Vergleichers V nicht mit dem Ausgang des Regelverstärkers RV sondern mit dem Ausgang der Summationsstelle SU verbunden ist. Während des Abgleichvorgangs, der wie bei den ersten beiden Ausführungsbeispielen abläuft, wird der Eingang des Regelverstärkers RV mittels des steuerbaren Schalters S1 auf Bezugspotential gelegt.

Weil der Eingang des steuerbaren Schalters S1 hochohmig gewählt ist, sind der Ausgang der Summationsstelle SU und der Eingang des Regelverstärkers RV entkoppelt. Wenn sich die CD-Platte dreht, hat die Spannung am Ausgang der Summationsstelle SU einen sinusförmigen Verlauf. Jedesmal, wenn diese Spannung die Referenzspannung, die am zweiten Eingang des Vergleichers V liegt, unter- oder überschreitet, ändert der Vergleicher V sein Ausgangssignal. Die Kontrollschaltung K integriert nun die Zeiten, während denen die Spannung am Ausgang der Summationsstelle kleiner als die Referenzspannung ist und die Zeiten, während denen die Spannung am Ausgang der Summationsstelle SU größer als die Referenzspannung am zweiten Eingang des Vergleichers V ist. Die Kontrollschaltung ändert solange die digitale Spannung an ihrem Ausgang A1, bis die Spannung am Ausgang der Summationsstelle SU im Mittel ebenso lange über wie unter die Referenzspannung am zweiten Eingang des Vergleichers V liegt, denn dann ist die Offset-Spannung des Photodetektors P kompensiert.

Die Offset-Spannung des Regelverstärkers RV wird allerdings nicht kompensiert. Das ist aber weiter kein Nachteil, weil die Offset-Spannung des Regelverstäkers RV verglichen mit der Offset-Spannung des Photodetektors P vernachlässigbar klein ist.

**Patentansprüche**

1. Spurregelkreis zum Führen eines Lichtstrahls entlang den Datenspuren eines Aufzeichnungsträgers, der den Lichtstrahl auf einen Photodetektor (P) reflektiert, dessen Ausgangsspannung über einen Regelverstärker (RV) einem Stellglied (S) zugeführt wird, wobei zur Kompensation von Offset-Spannungen der Ausgangsspannung des Photodetektors (P) eine Kompensationsspannung überlagert wird, **dadurch gekennzeichnet, daß** bei einer effektiven Unterbrechung des Spurregelkreises durch Kurzschließen der HF-Spannung die Kompensationsspannung so lange verändert wird, bis die Summe der Ausgangsspannung des Photodetektors (P) und der Kompensationsspannung nach dem Kurzschließen der HF-Spannung einen vorgebbaren Wert annimmt, daß die so ermittelte Kompensationsspannung an den Regelkreis angelegt bleibt und daß anschließend der Regelkreis wieder hergestellt wird, indem der Kurzschluß der HF-Spannung unterbunden wird.

2. Spurregelkreis nach Anspruch 1, **dadurch gekennzeichnet, daß** der Ausgang des Photodetektors (P) mit dem ersten Eingang einer Summationsstelle (SU) verbunden ist, deren zweiter Eingang mit dem Ausgang eines Digital-Analog-Wandlers (DA) verbunden ist, daß der Ausgang der Summationsstelle (SU) mit dem Eingang des Regelverstärkers (RV) verbunden ist und über eine Reihenschaltung aus einer Kapazität und einem steuerbaren Schalter (S1) auf Bezugspotential liegt, daß der Ausgang des Regelverstärkers (RV) mit dem Eingang des Stellgliedes (S) und dem ersten Eingang eines Vergleichers (V) verbunden ist, an dessen zweitem Eingang eine Referenzspannung liegt, und daß der Ausgang des Vergleichers (V) mit dem Eingang (E1) einer Kontrollschaltung (K) verbunden ist, deren erster Ausgang (A1) mit dem Eingang des Digital-Analog-Wandlers (DA) und deren zweiter Ausgang (A2) mit dem Steuereingang des ersten steuerbaren Schalters (S1) verbunden ist.

3. Spurregelkreis nach Anspruch 2, **dadurch gekennzeichnet, daß** zwischen dem Regelverstärker (RV) und dem Stellglied (S) ein zweiter steuerbarer Schalter (S2) vorgesehen ist, dessen Steuereingang mit dem dritten Ausgang (A3) der Kontrollschaltung (K) verbunden ist, und daß der zweite steuerbare Schalter (S2) während des Abgleichs von der Kontrollschaltung (K) geöffnet wird.

4. Spurregelkreis nach Anspruch 1, **dadurch gekennzeichnet, daß** der Ausgang des Photodetektors (P) mit dem ersten Eingang einer Summationsstelle (SU) verbunden ist, deren zweiter Eingang mit dem Ausgang eines Digital-Analog-Wandlers (DA) verbunden ist, daß der Ausgang der Summationsstelle (SU) mit dem ersten Eingang eines Vergleichers (V) und mit dem Eingang des Regelverstärkers (RV) verbunden ist sowie über einen steuerbaren Schalter (S1) mit Bezugspotential verbindbar ist, daß der Ausgang des Regelverstärkers (RV) mit dem Eingang des Stellgliedes (S) verbunden ist, daß der erste Ausgang (A1) einer Kontrollschaltung (K) mit dem Eingang des Digital-Analog-Wandlers (DA) verbunden ist, daß der zweite Ausgang (A2) der Kontrollschaltung (K) mit dem Steuereingang des steuerbaren Schalters (S1) verbunden ist und daß der Eingang (E1) der Kontrollschaltung (K) mit dem Ausgang des Vergleichers (V) verbunden ist, an dessen zweitem Eingang eine Referenzspannung liegt.

## Claims

1. Track control system for guiding a light beam along the data tracks of a record carrier, which reflects the light beam onto a photodetector (P) whose output voltage is fed via a servo amplifier (RV) to an actuator (S), there being superimposed on the output voltage of the photodetector (P) for the compensation of offset voltages a compensation voltage, characterised in that in the event of effective interruption of the track control system by short-circuiting of the HF voltage the compensation voltage is varied until such time as the sum of the output voltage of the photodetector (P) and the compensation voltage assumes after the short-circuiting of the HF voltage a pre-settable value, that the compensation voltage determined in this way remains applied to the control system and that subsequently the control system is restored by the short-circuit of the HF voltage being arrested.

2. Track control system according to claim 1, characterised in that the output of the photodetector (P) is connected to the first input of a summation point (SU) whose second input is connected to the output of a digital-to-analog converter (DA), that the output of the summation point (SU) is connected to the input of the servo amplifier (RV) and via a series circuit consisting of a capacitor and a controllable switch (S1) lies at reference potential, that the output of the servo amplifier (RV) is connected to the input of the actuator (S) and to the first input of a comparator (V) at whose second input a reference voltage is applied, and that the output of the comparator (V) is connected to the input (E1) of a control circuit (K) whose first input (A1) is connected to the input of the digital-to-analog converter (DA) and whose second output (A2) is connected to the control input of the first controllable switch (S1).

3. Track control system according to claim 2, characterised in that between the servo amplifier (RV) and the actuator (S) a second controllable switch (S2) is provided whose control input is connected to the third output (A3) of the control circuit (K), and that the second controllable switch (S2) is opened during the adjustment by the control circuit (K).

4. Track control system according to claim 1, characterised in that the output of the photodetector (P) is connected to the first input of a summation point (SU) whose second input is connected to the output of a digital-to-analog converter (DA), that the output of the summation point (SU) is connected to the first input of a comparator (V) and to the input of the servo amplifier (RV) and can be connected via a controllable switch (S1) to reference potential, that the output of the servo amplifier (RV) is connected to the input of the actuator (S), that the first output (A1) of a control circuit (K) is connected to the input of the digital-to-analog converter (DA), that the second output (A2) of the control circuit (K) is connected to the control input of the controllable switch (S1) and that the input (E1) of the control circuit (K) is connected to the output of the comparator to whose second input a reference voltage is applied.

## Revendications

1. Circuit de réglage pour guider un faisceau lumineux le long des pistes de données d'un support d'enregistrement qui reflète le faisceau lumineux sur un photodétecteur (P) dont la tension de sortie est amenée par un amplificateur de réglage (RV) à un composant de réglage (S), une tension de compensation étant superposée à la tension de sortie du photodétecteur (P) pour la compensation des tensions offset, **caractérisé en ce** que, lors d'une interruption effective du circuit de réglage de pistes par mise en court-circuit de la tension haute fréquence, la tension de compensation est modifiée jusqu'à ce que la somme de la tension de sortie du photodétecteur (P) et de la tension de compensation après avoir court-circuité la tension haute fréquence prenne une valeur qui peut être prédéterminée, que la tension de compensation ainsi détectée reste appliquée sur la boucle d'asservissement et qu'ensuite la boucle d'asservissement est reconstituée en supprimant le court-circuit de la tension haute fréquence.

2. Circuit de réglage de pistes selon la revendication 1, **caractérisé en ce** que la sortie du photodétecteur (P) est reliée à la première entrée d'un addeur (SU) dont la seconde entrée est reliée à la sortie d'un convertisseur numérique-analogique (DA), que la sortie de l'addeur (SU) est reliée à l'entrée de l'amplificateur de réglage (RV) et qu'elle est mise sur le potentiel de référence par un montage en série constitué par un condensateur et un commutateur qui peut être commandé (S1), que la sortie de l'amplificateur de réglage (RV) est reliée à l'entrée du composant de réglage (S) et à la première entrée d'un comparateur (V) à la seconde entrée duquel est appliquée une tension de référence et que la sortie du comparateur (V) est reliée à l'entrée (E1) d'un montage de contrôle (K) dont la première sortie (A1) est reliée à l'entrée du convertisseur numérique-analogique (DA) et dont la seconde sortie (A2) est reliée à l'entrée de commande du premier commutateur qui peut être commandé (S1).

3. Circuit de réglage de pistes selon la revendication 2, **caractérisé en ce** qu'un second commutateur qui peut être commandé (S2) est prévu entre l'amplificateur de réglage (RV) et le composant de réglage (S), commutateur dont l'entrée de commande est reliée à la troisième sortie (A3) du montage de contrôle (K) et que le second commutateur qui peut être commandé (S2) est ouvert par le montage de contrôle (K) pendant l'égalisation.

4. Circuit de réglage de pistes selon la revendication 1, **caractérisé en ce** que la sortie du photodétecteur (P) est reliée à la première entrée d'un addeur (SU) dont la seconde entrée est reliée à la sortie d'un convertisseur numérique-analogique (DA), que la sortie de l'addeur (SU) est reliée à la première entrée d'un comparateur (V) et à l'entrée de l'amplificateur de réglage (RV) et qu'elle peut être reliée au potentiel de référence par un commutateur qui peut être commandé (S1), que la sortie de l'amplificateur de réglage (RV) est reliée à l'entrée du composant de réglage (S), que la première sortie (A1) d'un montage de contrôle (K) est reliée à l'entrée du convertisseur numérique-analogique (DA), que la seconde sortie (A2) du montage de contrôle (K) est reliée à l'entrée de commande du commutateur qui peut être commandé (S1) et que l'entrée (E1) du montage de contrôle (K) est reliée à la sortie du comparateur (V) à la seconde entrée duquel est appliquée une tension de référence.

Fig.1

Fig. 2

Fig.3